# EUROPEAN PATENT APPLICATION

(11) **EP 4 826 677 A1**
(43) Date of publication of application: **21.10.2026**
(21) Application number: 26172877.8
(22) Date of filing: 16.04.2026
(51) Int. Cl.: G06V 10/82, G01S 7/41, G01S 7/48, G01S 7/539, G01S 13/89, G01S 17/89, G01S 15/931

(54) **DEVICE AND METHOD FOR UPSCALING A FEATURE MAP OF AN IMAGE**

(30) Priority: 16.04.2025 EP 25171032
(71) Applicant: Robert Bosch GmbH, 70442 Stuttgart (DE)
(72) Inventor: Zhang, Dan, 71229 Leonberg (DE); Huang, Haiwen, 72074 Tübingen (DE)

(57) **Abstract**

Computer-implemented method for upsampling a feature map (*F*) of an image (*x*), the method comprising:
• Obtaining the image (*x*) and the feature map (*F*);
• Augmenting the image (*x*) with respective representations (c) of coordinates of pixels of the image, thereby creating an augmented image (*au*);
• Providing the augmented image (*au*) as input to a neural network (61), wherein the neural network (61) comprises at least one cross-attention layer (CA) that uses the augmented image (*au*) or a representation *(r)* thereof as query input and the feature map (*F*) as key input;
• Providing an output (*o*) of the neural network (60) as upsampled feature map, wherein the output (*o*) of the neural network (60) is based on an output of the cross-attention layer (CA).

## Description

### Prior art

Suri et al. "LiFT: A Surprisingly Simple Lightweight Feature Transform for Dense ViT Descriptors", https://arxiv.org/abs/2403.14625, 2024 discloses a self-supervised method to enhance the performance of ViT features for dense downstream tasks.

Kirillov et al., "Segment Anything" in ICCV, pages 4015-4026, 2023 discloses the segment anything model.

### Technical background

Modern computer vision systems interacting with physical reality may use Vision Foundation Models (VFMs) to extract meaningful representations. These representations may serve as a crucial bridge between the raw sensor data captured by sensors and the higher-level understanding of a scene depicted in the sensor data. These representations can then be used for extracting information about the e.g., to perform object detection, semantic segmentation, and depth estimation, all of which are essential for robots and autonomous systems navigating and interacting with the physical world.

VFMs, while effective at capturing semantic information, often employ aggressive pooling operations to achieve computational efficiency. This results in feature maps with significantly reduced spatial resolution compared to the original input image. This lower resolution hinders the ability of downstream tasks to perform precise pixel-level analysis, which is often crucial for accurate interaction with physical reality. For example, a robot manipulating objects needs fine-grained details to accurately grasp and position items; similarly, autonomous vehicles typically require precise object detection for safe navigation.

Existing approaches to address this resolution limitation include using larger input images or training task-specific decoders. However, using larger images leads to a quadratic increase in computational cost, making it impractical for real-time applications interacting with dynamic physical environments. Training task-specific decoders is resource-intensive and lacks generalizability, requiring retraining for each new task. Neither solution offers a practical and efficient way to obtain high-resolution features directly from pre-trained VFMs. This poses a significant challenge for computer vision systems deployed in real-world scenarios where computational resources are limited and adaptability to new tasks is essential.

Existing task-agnostic upsampling methods for representations of images still struggle to produce high-quality, high-resolution features that accurately reflect the details present in the original image. This limitation stems from the challenge of designing effective training objectives and upsampler architectures that can capture fine-grained information while avoiding the introduction of artifacts, which can negatively impact the performance of downstream tasks operating in the physical world. Consequently, there remains a need for a more effective and efficient method for upsampling VFM features to enable accurate pixel-level understanding and facilitate robust interaction with physical reality.

The present invention addresses the aforementioned limitations by introducing a novel method for upsampling feature maps of images. This method especially overcomes the resolution limitations of VFMs, enabling enhanced performance in downstream tasks that require precise pixel-level understanding and, consequently, more effective interaction with physical reality.

### Disclosure of the invention

In a first aspect, the invention concerns a computer-implemented method for upsampling a feature map of an image, the method comprising:
- Obtaining the image and the feature map;
- Augmenting the image with respective coordinates of pixels of the image, thereby creating an augmented image;
- Providing the augmented image as input to a neural network, wherein the neural network comprises at least one cross-attention layer that uses the augmented image or a representation thereof as query input and the feature map as key input;
- Providing an output of the neural network as upsampled feature map, wherein the output of the neural network is based on an output of the cross attention layer.

The term "feature map" may be understood as a multi-dimensional data representation extracted from an image by a feature extractor, such as a convolutional neural network or a vision transformer. It may represent different levels of abstraction, from low-level features like edges and textures to high-level semantic features representing objects or concepts. A feature map may be a tensor, where each element may correspond to a spatial location in the image and each channel may represent a different learned feature. The spatial dimensions of a feature map may be smaller than the original image due to pooling or striding operations within the feature extractor. Furthermore, a feature map may be an intermediate representation within a larger neural network, or it may be the final output of a feature extraction process. It may encode information about the image content in a compressed and computationally efficient format, suitable for use in downstream tasks like image classification, object detection, or semantic segmentation. A feature map may also be referred to as a feature representation, an activation map, or a tensor representation.

The term "image" may be understood broadly as a visual representation of a scene or object, and is not limited to traditional photographs or RGB images. An image may be a two-dimensional or multi-dimensional array of data, where each element may represent a measured value or intensity at a specific spatial location. An image may be acquired from various sensors, including but not limited to cameras, lidar sensors, radar sensors, ultrasonic sensors, or other imaging devices. An image may represent different modalities, such as intensity, depth, reflectivity, or other physical properties. Specifically, an image may be recorded by a sensor as part of the method claimed, and the data representing the image may be subsequently processed. An image may be a single frame or part of a sequence of frames, as in a video. Further, the image may be preprocessed, for instance, for noise reduction or color correction, before being used in the method.

The expression "upsampling a feature map" may be understood as a process of increasing the spatial resolution of a feature map. This may involve interpolating values between existing feature values, learning a transformation to a higher-resolution representation, or a combination of both. The goal of upsampling may be to obtain a feature map with a spatial resolution closer to that of the original image, enabling finer-grained analysis and better performance in tasks requiring pixel-level precision. The upsampling process may be performed using various techniques, such as nearest-neighbor interpolation, bilinear interpolation, bicubic interpolation, transposed convolutions, or dedicated upsampling networks. The upsampled feature map may especially retain the same number of channels as the original feature map.

The expression "augmenting the image with respective coordinates of pixels" may be understood as adding spatial information to the image. This may involve creating additional channels within the image representation, where each pixel's value in these new channels corresponds to its x and y coordinates within the image. The coordinates may be represented as raw pixel indices, normalized values between 0 and 1, or they may be transformed using a function such as sinusoidal encoding. This augmentation may provide explicit spatial cues to the neural network, allowing it to better understand the geometric relationships between different parts of the image. The augmented image may be used as input to a neural network, or it may undergo further processing before being used.

The expression "cross-attention layer that uses the augmented image or a representation thereof as query input and the feature map as key input," may be understood as a component of a neural network that allows for interaction between two distinct feature representations: an augmented image and a feature map. The augmented image, or alternatively a representation thereof obtained through the image undergoing transformations (e.g., being forwarded through layers) within the network, serves as the query, which can be understood as a high-resolution spatial representation seeking relevant information. The feature map serves as the key, which can be understood as a lower-resolution representation containing semantic information. The cross-attention mechanism computes attention weights based on the similarity between the query (augmented image) and key (feature map) features. This similarity measure may be implemented, for example, as a dot product between the query and key vectors, followed by a scaling operation and a softmax function to normalize the weights. These attention weights are then used to selectively aggregate information from the value input, which may be the feature map itself or another related representation. This allows the network to combine detailed spatial information from the augmented image with richer semantic information from the feature map. The cross-attention layer may be implemented using various techniques, such as scaled dot-product attention. The output of the cross-attention layer may be a new feature representation that integrates information from both inputs, which can be understood as a high-resolution feature map enriched with semantic context. This combined representation may be further processed by subsequent layers in the network.

The feature map may especially be used as "value input" of the cross-attention layer as well.

The neural network may use the combined representation from the cross-attention layer, which integrates information from both the augmented image and the feature map, to generate the upscaled feature map as output in several ways, i.e., basing the output of the neural network on the output of the cross-attention layer may be achieved in a plurality of ways. For example, the combined representation may be passed through one or more convolutional layers. These convolutional layers may learn filters that effectively combine the spatial and semantic information to produce the desired high-resolution output. Alternatively, the combined representation may be input to a series of upsampling layers, such as transposed convolutions or dedicated upsampling blocks. These upsampling layers may increase the spatial resolution of the feature map while preserving the learned features. Furthermore, the network may employ a combination of convolutional and upsampling layers to refine the combined representation and generate the final upscaled feature map.

In a preferred embodiment, the output of the cross-attention layer may form part of a transformer block, which preferably may include a feedforward network, layer normalization, and/or residual connections. The output of this transformer block may then be used directly as the output of the neural network, i.e., the upsampled feature map, thereby efficiently combining spatial and semantic information in a single processing step. The specific architecture and configuration of the transformer block after the cross-attention layer may be determined through techniques such as hyperparameter optimization or neural architecture search. Additionally, the network may incorporate skip connections, residual connections, or other architectural elements to facilitate training and improve performance.

Advantageously, the inventors found that the method presented above allows for obtaining upsampled feature maps, which are more accurate with respect to other upsampling approaches. The use of a cross-attention layer, with the augmented image as the query and the feature map as the key, enables content-aware upsampling, leading to a reduction in artifacts and blurring commonly seen with other methods. This results in "cleaner" and more accurate high-resolution feature maps. Furthermore, the method offers increased computational efficiency compared to implicit upsampling techniques that require iterative optimization. By utilizing a feedforward neural network, the upsampling process is significantly faster, which is a distinct technical advantage, particularly in resource-constrained environments or real-time applications. Moreover, the inclusion of explicit pixel coordinates allows the method to handle arbitrary output resolutions, providing flexibility not readily achievable with conventional upsampling techniques that are typically limited to fixed integer scaling factors. This adaptability is a technical feature that broadens the applicability of the method. The cross-attention mechanism also facilitates the effective integration of spatial information from the augmented image with the semantic information encoded in the feature map. This fusion of information results in high-resolution feature maps that are both spatially detailed and semantically rich, a technical improvement that contributes to enhanced performance in downstream tasks requiring precise pixel-level understanding. While improved performance in applications such as semantic segmentation, depth estimation, and object detection is an indirect benefit, it stems directly from the aforementioned technical improvements in image quality, computational efficiency, and resolution flexibility provided by the method.

The authors found that the improved upsampled feature map leads to an improvement in accuracy of predictions of machine learning systems for semantic segmentation, depth estimation, interactive segmentation, normal estimation, open vocabulary segmentation and video object segmentation (also known as object tracking) when using the resulting upsampled feature map as input to the machine learning system.

In preferred embodiments, the neural network may comprise or consist of a plurality of blocks, wherein each block comprises or consists of a cross-attention layer using the feature map as key input and wherein an output of the cross-attention layer is used as input to a fully connected neural network.

The term "plurality of blocks" may be understood as referring to a collection of two or more processing units, or blocks, arranged within the neural network, which can be considered logical clusters of layers within the neural network. Each block, which may also be referred to as a "transformer block," may perform a specific operation or a sequence of operations on the input data. These blocks may be identical in structure and function, or they may be different, each specializing in a particular aspect of the overall processing task. Specifically, each block may comprise a cross-attention layer that uses the feature map as key input and the augmented image, or a representation thereof, as query input, as described above. The blocks may be arranged sequentially, where the output of one block serves as the input to the next, or they may be arranged in a more complex configuration, such as a parallel or branched structure. The blocks may share parameters, or they may have independent sets of parameters. The plurality of blocks may contribute to the overall depth and complexity of the neural network, enabling it to learn more sophisticated representations and perform more complex tasks. The number of blocks in the plurality may vary depending on the specific application and desired performance characteristics.

The actual number of blocks may be considered a hyperparameter of the method and can be "tuned" using common hyperparameter optimization techniques. The blocks may be implemented using various types of layers, such as convolutional layers, fully connected layers, attention layers, or other specialized processing units.

In particular, the neural network may consist of a plurality of transformer blocks, wherein each block consists of a cross-attention layer with inputs as described above and a fully-connected neural network, which uses the output of the cross-attention layer is input in order to determine an output of the transformer block.

Advantageously, the inventors found that the architecture according to these preferred embodiments allows for a highly precise prediction of the upsampled feature map while also being computationally "cheap" as the architecture doesn't require iterative finetuning.

In preferred embodiments the neural network may comprise a convolutional layer as a first layer of the neural network, wherein the convolutional layer preserves a width and height of the image.

These preferred embodiments may be understood as the neural network employing a width and height preserving convolutional layer as an input layer, wherein an output of the convolutional layer may then be forwarded to other layers or parts of the neural network, in particular to a plurality of transformer blocks as described in any one of the previous embodiments.

The phrase "the convolutional layer preserves a width and height of the image" may be understood as meaning that the spatial dimensions of the output of the convolutional layer are the same as the spatial dimensions of the input image. This may be achieved through several techniques. For example, padding may be applied to the input image before performing the convolution. This padding may add extra rows and columns of pixels around the borders of the image, effectively increasing its size. The convolution operation may then be performed on this padded image. By choosing an appropriate padding scheme, such as "same" padding, the output of the convolution may have the same width and height as the original, unpadded image. Alternatively, a convolutional layer with a stride of one and a kernel size that maintains the spatial dimensions may be used. Furthermore, dilated convolutions, which introduce gaps between the elements of the convolution kernel, may also be employed to preserve the width and height of the image while increasing the receptive field of the convolutional layer.

In particular, the neural network may consist of a 3-by-3 convolutional layer using 1-pixel padding as a first layer followed by a plurality of transformer blocks, wherein each block consists of a cross-attention layer with inputs as described above and a fully-connected neural network, which uses the output of the cross-attention layer is input in order to determine an output of the transformer block.

The inventors found that, advantageously, employing a convolutional layer as a first layer suitably combines the information from both pixels of the image as well as positional encoding such that ensuing layers or blocks of the neural network are not biased by through pixels and positional encodings having different "channels" in the input of the neural network. This leads to a combined representation of both pixels and positions, which allow for an unbiased further processing. In particular, the convolutional layer further improves the prediction accuracy of the neural network.

In preferred embodiments, the representation of the coordinates of the pixels of the image is a sinusoidal positional encoding of a pixels' respective position within the image.

The expression "sinusoidal positional encoding," may be understood as an encoding for representing the position of pixels within an image using sinusoidal functions. This encoding may be achieved by generating a set of sine and cosine waves with different frequencies, where each frequency may correspond to a different spatial dimension (e.g., x and y coordinates). For each pixel, the values of these sine and cosine waves at the pixel's coordinates may be calculated and concatenated to form the positional encoding. This sinusoidal positional encoding may then be combined with the pixel values of the image, for example, by concatenation, to create an augmented image representation.

Advantageously, the use of sinusoidal functions may provide a smooth and continuous representation of position, allowing the neural network to learn spatial relationships between pixels more effectively. Furthermore, sinusoidal encodings may enable the network to generalize to images of different sizes, as the positional encodings may be scaled or extrapolated to accommodate different image dimensions. These aspects lead to a further improvement of accuracy of the predictions of the neural network.

Preferred embodiments of the method also comprise a computer-implemented method for determining a semantic segmentation of an image and/or for determining a depth map of the image and/or for determining normal of objects in the image and/or for detecting objects in the image comprising the steps of:
- Determining a feature map of the image by providing the image as input to a feature extractor;
- Determining an upsampled feature map by providing the determined feature map and the image as input to the method according to any one of the embodiments as described above;
- Determining the semantic segmentation and/or the depth map and/or the normals and/or the objects in the image by providing the upsampled feature map to a respective head for determining the semantic and/or depth map head and/or normals and/or the objects.

These embodiments can be understood as embedding the method for upscaling a feature map into other applications, namely semantic segmentation, depth estimation, object detection or normal estimation.

The term "feature extractor" may be understood as a component, for example a neural network, of a computer vision system that transforms an input image into a feature map. This transformation may involve extracting relevant information from the image, such as edges, textures, shapes, or higher-level semantic concepts. A feature extractor may be pre-trained on a large dataset of images, allowing it to learn general features that are useful for a variety of downstream tasks. Examples of feature extractors may include convolutional neural networks (CNNs), vision transformers (ViTs), or other architectures designed for image analysis. The output of a feature extractor, the feature map, may be a lower-dimensional representation of the input image, encoding relevant information in a more compact and computationally efficient format. The feature map may then be used as input to other components of the computer vision system, such as classifiers, detectors, or segmentation networks. A feature extractor may be a standalone module, or it may be integrated into a larger neural network architecture.

The inventors found that using a DINOv2 neural network as feature extractor allows for more accurate upsampled feature maps, in particular a DINOv2-S/14 model. However, other architectures such as CLIP and RADIO may be used as well.

The term "head" may be understood as a machine learning system, specifically a neural network, which performs a specific task in terms of computer vision. A head may be a relatively small neural network (as small as only a single layer) that takes a feature map as input and produces a desired output, such as a semantic segmentation, a depth map, surface normals, or object detections. A head may be trained independently or as part of a larger, multi-task network. In the context of a multi-task network, multiple different heads may share the upsampled feature map as input, each head specializing in a different task. This allows the network to provide shared representation from the input image that can be used for multiple purposes, improving efficiency and potentially enhancing performance. A head may comprise various layers, such as convolutional layers, fully connected layers, or other specialized processing units, depending on the specific task (e.g., object detection, semantic segmentation, video object segmentation, depth estimation, or normal estimation) it performs. A head may be a standalone machine learning system taking a feature map as input or it may be a component integrated into a larger neural network architecture as part of a multi-task machine learning system.

The authors found that, advantageously, the overall prediction accuracy for the mentioned tasks is improved when using the upsampled feature map determined as described above as input to the heads.

In another aspect, the invention concerns a computer-implemented method for training a neural network according to any one of the preceding claims, wherein the method comprises the steps of:
- Upsampling a feature map of a training image according to any one embodiment of the method as described above, thereby determining a predicted upsampled image;
- Generating an intermediate upsampled feature map from the feature map using bicubic interpolation;
- Obtaining a class-agnostic mask for the training image;
- Refining the intermediate upsampled feature map based on the class-agnostic mask by blending mean feature values of regions within the mask with corresponding values in the intermediate upsampled feature map, thereby generating a desired upsampled feature map;
- Training the neural network used in the method according to any one of the preceding claims based on a loss function, wherein the loss function characterizes a difference between the predicted upsampled map and the desired upsampled feature map.

The inventors found that, advantageously, the method allows for training the neural network with an emphasis sharp boundaries and geometric awareness, which in turn leads to an improved prediction of upsampled feature maps. This is in addition to the advantage that the training method may be run unsupervised, i.e., without requiring annotations of the training images. The inventors further found that the method can in particular be used as a method for pre-training the neural network.

The expression "generating an intermediate upsampled feature map from the feature map using bicubic interpolation" may be understood as increasing the spatial resolution of a feature map using a bicubic interpolation algorithm. Bicubic interpolation may estimate the values of new "pixels" in the upsampled feature map by considering a weighted average of the nearest neighboring pixels in the original feature map. The weights in this average may be determined by a bicubic function, which may provide a smoother interpolation compared to simpler methods like bilinear interpolation. Specifically, the bicubic function may be applied to both the horizontal and vertical dimensions of the feature map. This bicubic interpolation process may be applied to each channel of the feature map independently. The result of this operation may be an intermediate upsampled feature map with increased spatial dimensions and smoothly interpolated values.

The expression "obtaining a class-agnostic mask for the training image" may be understood as acquiring a mask that segments the training image into distinct regions without assigning specific class labels to those regions. This mask may identify salient regions or objects within the image, but it does not categorize them into predefined classes. The class-agnostic mask may be generated using various techniques, such as unsupervised segmentation algorithms, edge detection methods, or attention mechanisms. Preferably, a segmentation model like Segment Anything Model (SAM) can be used to generate such masks. The mask may be a binary image where each pixel is assigned a value of 0 or 1, indicating whether it belongs to a salient region or not. Alternatively, the mask may have multiple channels, where each channel may represent a different segment or region.

The expression "blending mean feature values of regions within the mask with corresponding values in the intermediate upsampled feature map" may be understood as a process of refining the intermediate upsampled feature map using information derived from the class-agnostic mask. The mask, initially obtained for the training image, may be overlayed onto the intermediate upsampled feature map to define corresponding regions within the intermediate upsampled feature map (possibly rescaling the mask to a size of the intermediate upsampled feature map if it is larger or smaller than the training image). For each connected region defined by the mask, a mean feature vector may be calculated. Specifically, the pixels within each region in the intermediate feature map may be treated as vectors, and the mean of these vectors may be computed to obtain the mean feature vector for that region. This mean feature vector may represent the average feature representation within the corresponding masked region. These mean feature values may then be blended with the original values in the intermediate upsampled feature map. The blending operation may be a weighted average, where the weights may determine the contribution of the mean feature values and the original feature map values to the final refined feature map. This blending process enhances the representation of salient regions in the refined upsampled feature map by introducing a sense of "similarity" of feature vectors (pixels of the feature map) determined for connected regions in the training image in addition to "smoothing out" feature vectors for semantically similar or identical pixels.

In particular, blending may be achieved according to the formula: ${F}_{refined} \left[m\right] = α ⋅ \overline{{F}_{Bιcubιc} \left[m\right]} + \left(1-α\right) ⋅ {F}_{Bicubic} \left[m\right] ,$ wherein *F_{Bicubic}*[*m*] is the m-th region of intermediate upsampled feature map obtained using bicubic interpolation, *α* is a "blending factor" than can be understood as a hyperparameter of the training method, and *̅F̅_̅{̅B̅i̅c̅u̅b̅i̅c̅}̅*̅[̅*̅m̅*̅]̅ is the mean of the m-the region *F_{Bicubic}*[*m*]*.*

The expression "training the neural network used in the method according to any one of the preceding claims based on a loss function" may be understood as training the neural network according to common optimization strategies employing a loss function, e.g., (stochastic) gradient descent on the loss function with respect to weights (i.e., trainable parameters) of the neural network or evolutionary optimization strategies using the loss function as target to be minimized. The loss function ay especially be a an *L*₂-loss or squared *L*₂-loss between the refined (i.e., desired) upsampled feature map and the predicted upsampled feature map.

In another aspect, the invention concerns a computer-implemented method for training a first neural network configured according to any one of the embodiments described above, wherein the method comprises the steps of:
- Training the first neural network according to the method for training described above and training a second neural network according to the method for training as described above;
- Obtaining a crop of a training image (*xᵢ*) and downsampling the training image (*xᵢ*) thereby determining a downsampled image;
- Determining a first feature map by means of using the downsampled image as input to a feature extractor and determining a second feature map by means of using the crop as input to the feature extractor;
- Determining a first upsampled feature map according to any one of the claims 1 to 5 using the downsampled image and the first feature map as input and using the first neural network as neural network within the method;
- Determining a second upsampled feature map according to any one of the claims 1 to 5 using the crop and the second feature map as input and using the second neural network as neural network within the method;
- Determining a region in the first upsampled feature map that corresponds to the region of the crop in the training image (*xᵢ*);
- Downsampling the second feature map to the width and height of the region thereby determining a downsampled second feature map;
- Training the first neural network according to a loss function, wherein the loss function characterizes a difference between the region and the downsampled second feature map.

This method for training may be understood as a form of distillation of the neural network, in particular a form of self-distillation. The second neural network can be understood as a "teacher" and the first neural network as "student" according to common nomenclature in distillation training methods.

In particular, the method may be understood to comprise a two-stage paradigm: In a first stage, the first neural network is trained according to the unsupervised training method presented above, wherein it is then further refined in a second training phase comprising the steps as presented in this second training method.

The phrase "obtaining a crop of a training image and downsampling the training image thereby determining a downsampled image" may be understood as a two-step process applied to a training image. First, a crop, which may be understood as a smaller rectangular section, is extracted from the training image. This crop may be obtained using various techniques, such as random cropping, where the location and size of the crop are chosen randomly within the image, or center cropping, where the crop is taken from the center of the image. The size of the crop may be fixed, or it may be chosen randomly within a predefined range. Second, the original training image is downsampled, which may be understood as reducing the resolution of the image. This downsampling may be achieved by various methods, such as bilinear interpolation, bicubic interpolation, or nearest-neighbor interpolation. The specific downsampling method employed may influence the quality and smoothness of the resulting downsampled image. The result of this two-step process may be a downsampled image, which may have smaller dimensions and lower resolution, compared to the original training image, and a crop of the original training image. The crop may have the same resolution as the training image but smaller width and/or height. Alternatively, the crop may have the same width and height as the downsampled image and the training image, but the crop may only represent a part of the scene captured in the training image. The crop and the downsampled image may then be used as input to subsequent stages of the method.

The phrase "determining a first feature map by means of using the downsampled image as input to a feature extractor and determining a second feature map by means of using the crop as input to a feature extractor" may be understood as extracting feature representations from both the downsampled image and the crop of the training image. This feature extraction process may be performed using a pre-trained feature extractor model, such as a convolutional neural network (CNN) or a vision transformer (ViT). In preferred embodiments, the feature extractor may be DINOv2-S/14 model. However, other suitable feature extractors, such as CLIP or RADIO, may also be employed. The feature extractor may take the downsampled image or the crop as input and produce a corresponding feature map, which may be a multi-dimensional tensor representing the extracted features. The first feature map, derived from the downsampled image, may provide a lower-resolution representation of the entire image, while the second feature map, derived from the crop, may provide a higher-resolution representation of a specific region of interest within the image. These feature maps may then be used as input to subsequent stages of the method.

The phrase "determining a region in the first upsampled feature map that corresponds to the region of the crop in the training image" may be understood as identifying a portion of the first upsampled feature map that spatially aligns with the crop taken from the original training image. The crop, having been extracted from a specific location and size within the training image, corresponds to a particular region in the feature space of the upsampled feature map. This corresponding region may be determined by considering the scaling factor introduced during the downsampling and upsampling processes. Specifically, the coordinates of the crop within the original training image may be scaled according to the downsampling and upsampling factors to determine the corresponding coordinates within the upsampled feature map. The region in the upsampled feature map may have the same width and height as the crop or different dimensions determined by the scaling factor applied. This identified region in the upsampled feature map may then be used for comparison and training purposes, specifically for calculating a loss function relative to the features extracted from the crop of the training image, as described in the subsequent steps of the method. This process ensures that the training focuses on the relevant spatial correspondence between the upsampled features and the original image content.

The phrase "training the first neural network according to a loss function, wherein the loss function characterizes a difference between the region and the downsampled second feature map" may be understood as updating the parameters of the first neural network using a loss function that compares the features of a specific region in the first upsampled feature map with the features of a downsampled version of the second feature map. The region in the first upsampled feature map corresponds to the crop in the original training image, as described previously. The second feature map, derived from the crop, is downsampled to match the dimensions of this region. The loss function may quantify the difference or dissimilarity between the feature representations within these two corresponding regions. Various loss functions may be used, such as L1 loss, L2 loss (mean squared error), or other suitable metrics for comparing feature vectors. The calculated loss may then be used to update the weights and biases of the first neural network, typically through backpropagation and an optimization algorithm such as stochastic gradient descent. This training process aims to minimize the difference between the feature representations, effectively teaching the first neural network to generate upsampled feature maps that accurately reflect the information contained within the original, higher-resolution crop of the training image.

In preferred embodiments, the method further comprises the step of:
- Training the second neural network according to an exponential moving average of weights of the first neural network.

The inventors found that this approach improves prediction accuracy of the first neural network even further.

In preferred embodiments, the loss function characterizes an affinity matrix loss.

In other words, the loss function may be any form of an affinity loss, i.e., a scaled affinity loss or the like. The inventors found that, advantageously, using an affinity matrix loss further increases the prediction accuracy of the first neural network.

Embodiments of the invention will be discussed with reference to the following figures in more detail. The figures show:
- Figure 1: a machine learning system configured for upsampling a feature map;
- Figure 2: a machine learning system configured for predicting different outputs;
- Figure 3: a control system using the machine learning system for determining a control signal;
- Figure 4: the control system controlling an at least partially automated robot;
- Figure 5: the control system controlling a manufacturing machine;
- Figure 6: a method for training a neural network of the machine learning system;
- Figure 7: a method for training the neural network of the machine learning system;
- Figure 8: a training system for training the neural network.

### Description of the embodiments

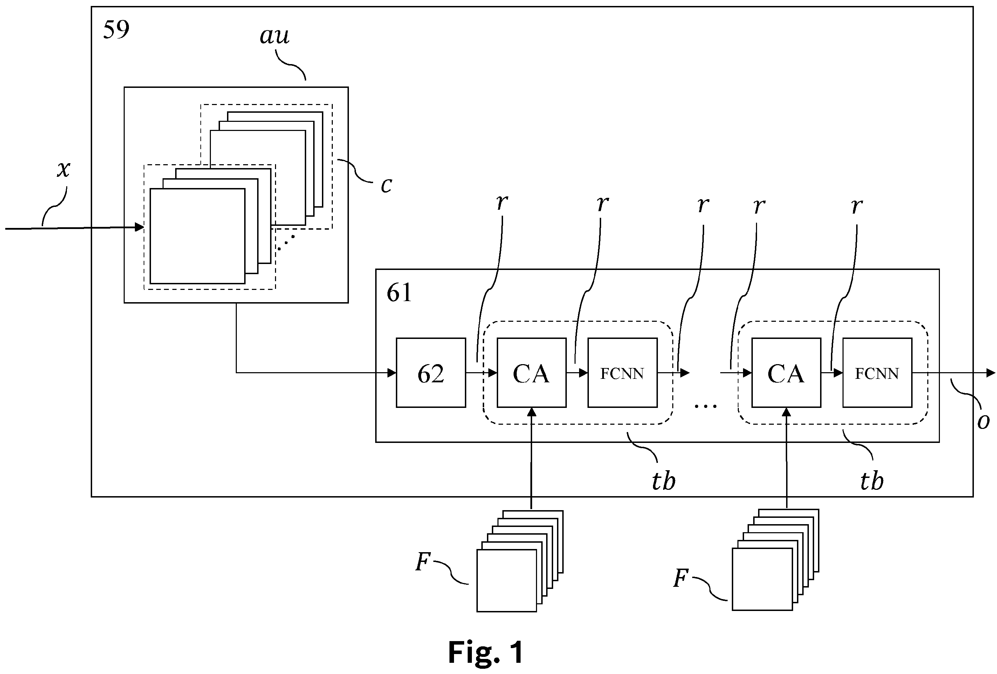

Figure 1 schematically shows a machine learning system (59) configured for running a method for upsampling a provided feature map (F) of a provided image *(x).* The image *(x)* is provided as input to the machine learning system (59). The image (x) is then augmented with a representation (c) of the pixel's coordinates thereby determining an augmented image (*au*)*.* In the embodiment, a 2-dimensional sinusoidal encoding is used as representation (c) but other representations are possible in the embodiment as well. The representation (c) has a same width and height dimension as does the image. For determining the augmented image (*au*) the image (x) and the representation (c) may hence be present in the form of a three-dimensional tensor, wherein augmentation is achieved by concatenating the image tensor and the representation tensor along a dimension orthogonal to the width and height dimensions of the respective tensors.

The augmented image (*au*) is provided as input to a neural network (61) of the machine learning system (59). The neural network (61) comprises an optional convolutional layer (62) as a first layer, in particular a 3-by-3 convolutional layer using a "same" padding strategy and comprising less than 1024 filters, in particular less than 512 filters, in particular 384 filters. The output of the convolutional layer can be understood as a representation (r) of the augmented image, in particular a representation (*r*) of the image *(x).* The representation (*r*) is provided as query input to a cross-attention layer (CA). The cross-attention layer (CA) is also provided the feature map (F) as a key input. Preferably, the cross-attention layer (CA) is also provided the feature map (F) as a value input.

An output of the cross-attention layer (which may again be understood as a representation (r) of the image, although numerically different from the representation (r) determined from the convolutional layer) is preferably provided as input to a fully-connected neural network (FCNN), in particular a multi-layer perceptron. The multilayer-perceptron may especially be a three-layer multi-layer perceptron, in particular employing a same number of neurons per layer, in particular wherein the number of total parameters of the multi-layer perceptron is quadratic in the number of filters used by the convolutional layer or, in case of no convolutional layer being used, wherein the number of total parameters of the multi-layer perceptron is 147456. The fully connected neural network (FCNN) determines another representation (r) of the image as output. The cross-attention layer and the fully connected neural network (FCNN) may be understood to belong to a "logical" block *(tb)* of the neural network, in particular a transformer block *(tb).* An output of the block (i.e., an output of the fully connected neural network (FCNN)) may be provided as output (o) of the neural network (61). Alternatively, the neural network (61) may comprise a plurality of blocks *(tb)* wherein the blocks *(tb)* are connected sequentially. The number of blocks *(tb)* can be considered a hyperparameter of the machine learning system (59). Preferably, the neural network (61) comprises less than 20 blocks *(tb),* in particular less than 10 blocks *(tb),* in particular 7 blocks *(tb).*

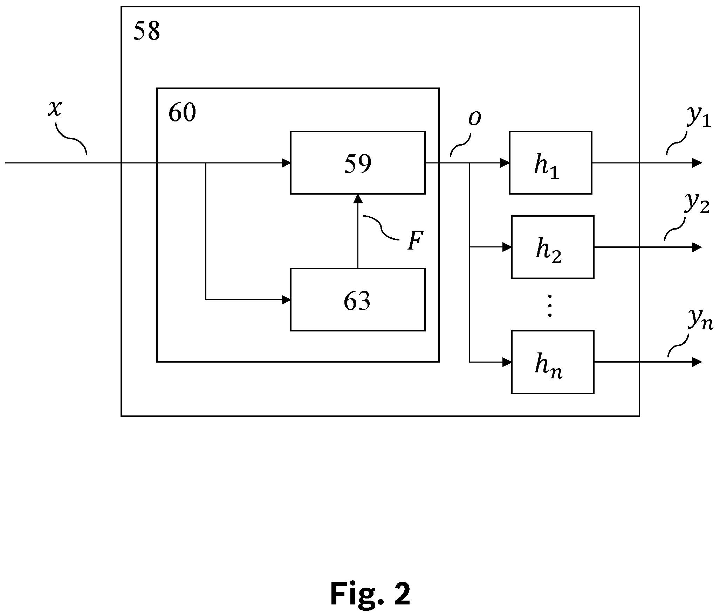

Figure 2 shows a second machine learning system (58) configured for executing a method for determining a semantic segmentation (*y*₁) of the image (x) and/or a depth estimation (*y*₂) of the image (x) and/or detecting objects (*yₙ*) within the image (x) using a third machine learning system (60). The third machine learning system (60) comprises the first machine learning system (59) and a feature extractor (63) for extracting a feature map (F) of the image (x). Preferably, the feature extractor (63) is a neural network, in particular a DINOv2-S14 neural network. However, other feature extractors (63) are possible as well, e.g., a CLIP neural network or a RADIO neural network.

The image (x) is provided as input to both the first machine learning system (59) and the feature extractor (63). The feature extractor (63) determines the feature map (F) and provides it as input to the first machine learning system (59). The first machine learning system (59) determines the upsampled feature map (o) as output and provides the upsampled feature map (o) as input to a head (*h*₁*,h*₂*,h*ₙ)*.* The head (*h*₁*,h*₂*, hₙ*) is configured for determining the semantic segmentation (*y*₁) or the depth estimation (*y*₂) or the object detection (*yₙ*). Preferably, the upsampled feature map (*o*) may be provided as input to a plurality of heads (*h*₁*, h*₂*, hₙ*), in particular a plurality of different heads (*h*₁, *h*₂*, hₙ*) configured for accomplishing multiple different tasks simultaneously using the upsampled feature map (*o*) as shared input representation for determining the respective outputs (also known as multi-task machine learning learning).
The output (*y*₁*, y*₂*, yₙ*) of the head (*h*₁*, h*₂*, hₙ*) or, in case a plurality of heads (*h*₁*, h*₂*, hₙ*) are employed, the outputs of the heads (*h*₁*, h*₂*, hₙ*) are then provided as output *(y*₁, *y*₂*, yₙ*) of the second machine learning system (58).

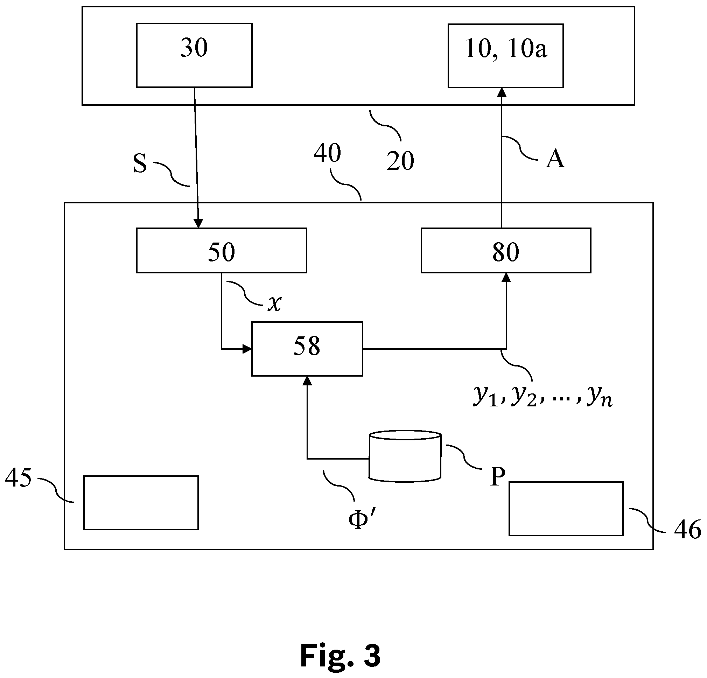

Figure 3 shows an embodiment of how the second machine learning system (60) can be used for determining control signals (A) of an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input image (x). Alternatively, in case of no receiving unit (50), each sensor signal (S) may directly be taken as an input image (x). The input image (x) may, for example, be given as an excerpt from the sensor signal (S). Alternatively, the sensor signal (S) may be processed to yield the input image *(x).* In other words, the input image *(x)* is provided in accordance with the sensor signal (S).

The input image (x) is then provided as input to the second machine learning system (58).

The second machine learning system (58) is parametrized by parameters (Φ), which are stored in and provided by a parameter storage (*St*₁).

The second machine learning system (58) determines an output signal (*y*₁,*y*₂*,yₙ*) from the input signals (x). The output signal (*y*₁*,*y₂*,yₙ*) comprises information that assigns one or more labels to the input image (x). The output signal (y) is transmitted to an optional conversion unit (80), which converts the output signal (*y*₁*,y*₂*,yₙ*) into the control signals (A). The control signals (A) are then transmitted to the actuator (10) for controlling the actuator (10) accordingly. Alternatively, the output signal (*y,y*₂*,yₙ*) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

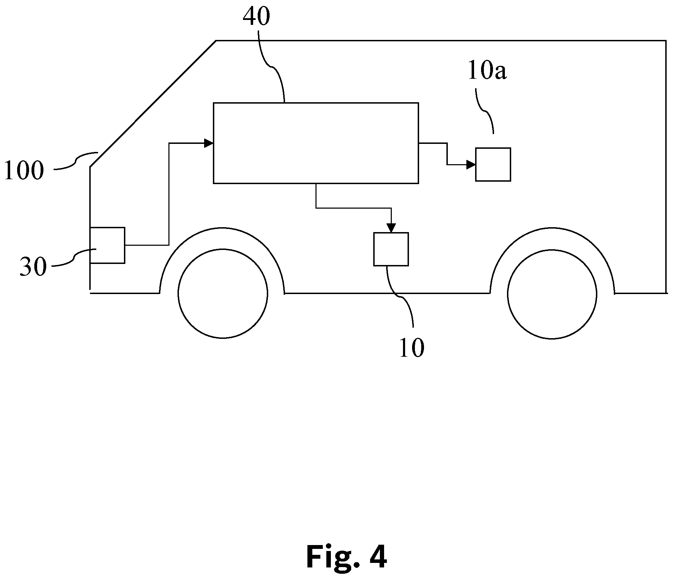

Figure 4 shows an embodiment in which the control system (40) is used to control an at least partially automated robot, e.g., an at least partially automated vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The second machine learning system (58) may be configured to detect objects in the vicinity of the at least partially autonomous robot based on the input image (x) and/or segment the input image (x) into at least drivable and non/drivable space. The output signal *(y*₁,*y*₂*,yₙ*) may comprise an information, which characterizes where objects are located in the vicinity of the at least partially automated robot. The control signal (A) may then be determined in accordance with this information, for example to avoid collisions with the detected objects while staying within a permissible drivable area.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the second machine learning system (58) deems them most likely to be, e.g., pedestrians or trees, and the control signal (A) may be determined depending on the classification.

Alternatively or additionally, the control signal (A) may also be used to control the display (10a), e.g., for displaying the objects detected by the second machine learning system (58). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

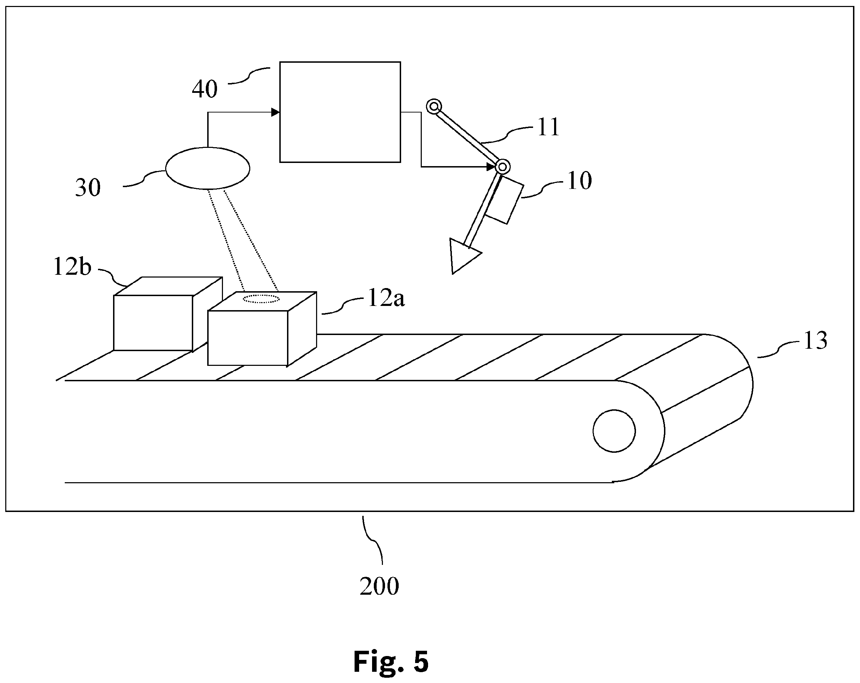

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The machine learning system (60) may hence be understood as an image classifier.

The second machine learning system (58) may be configured to determine a position of the manufactured product (12) with respect to the transportation device, i.e., detect objects on or relative to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the machine learning system (60) classifies, whether the manufactured product is broken and/or exhibits a defect. The actuator (10) may then be controlled as to remove the manufactured product from the transportation device.

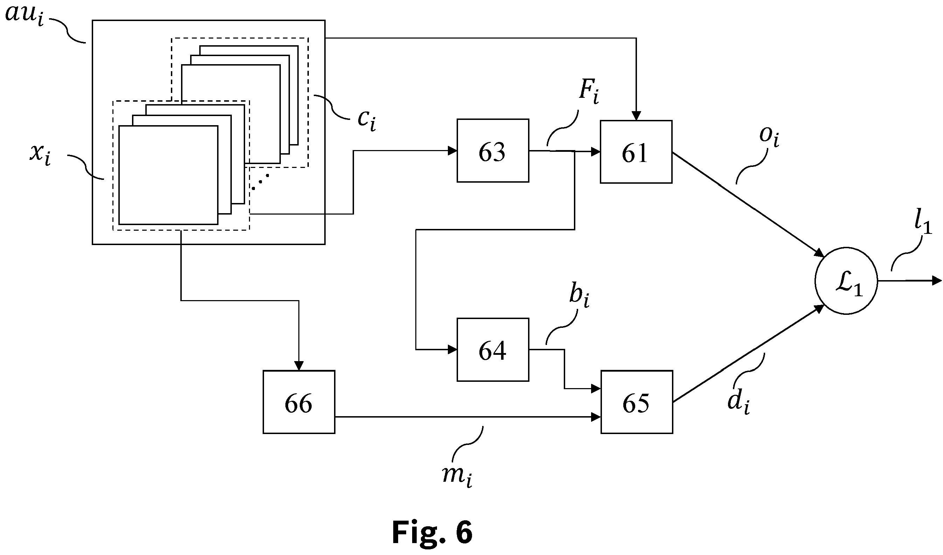

Figure 6 shows a method for training the neural network (61). A provided training image (*xᵢ*) is transformed into an augmented image (*auᵢ*) as described for Figure 1. The image is the provided to the feature extractor (63) for determining a feature map (*Fᵢ*). The feature map (*Fᵢ*) and the image are then provided as input to the neural network (61). The neural network (61) determines an upsampled feature map (*oᵢ*).

The training image (*xᵢ*) is also provided to a class-agnostic segmentation module (66). The class-agnostic segmentation module (66) is configured to determine a class-agnostic mask (*mᵢ*) for the training image (*xᵢ*), in particular in terms of semantic segmentation maps of the training image (*xᵢ*) segmenting respective parts of the training image (*xᵢ*). The class-agnostic segmentation module (66) may especially employ a SAM, i.e., segment anything model, for determining the class-agnostic mask (*mᵢ*).

The feature map (*Fᵢ*) is also provided to an upsampling module (64). The upsampling module is configured to upsample the feature map (*Fᵢ*), in particular to a size of the training image (*xᵢ*). The upsampling module (64) may especially use bicubic upsampling for determining an intermediate upsampled feature map (*bᵢ*). The intermediate upsampled feature map (*bᵢ*) and the class-agnostic masks (*mᵢ*) are provided as input to a blending module (65), wherein the blending module is configured for blending feature vectors of the intermediate upsampled feature map (*bᵢ*) with a respective mean of a region the feature vector belongs to. The mask (*mᵢ*), initially obtained for the training image (*xᵢ*), may be overlayed onto the intermediate upsampled feature map (*bᵢ*) to define corresponding regions within the intermediate upsampled feature map (*bᵢ*). For each connected region defined by the mask (*mᵢ*), a mean feature vector may be calculated. Specifically, the "pixels" within each region in the intermediate upsampled feature map (*bᵢ*) may be treated as vectors, and the mean of these vectors may be computed to obtain the mean feature vector for that region. This mean feature vector may represent the average feature representation within the corresponding masked region. These mean feature values may then be blended with the original values in the intermediate upsampled feature map (*bᵢ*). The blending operation may be a weighted average, where the weights may determine the contribution of the mean feature values and the original feature map values to the final refined feature map.

In particular, blending may be achieved according to the formula: ${F}_{refined} \left[m\right] = α ⋅ \overline{{F}_{Bιcubιc} \left[m\right]} + \left(1-α\right) ⋅ {F}_{Bicubic} \left[m\right] ,$ wherein *F_{Bicubic}*[*m*] is the m-th region of intermediate upsampled feature map (*bᵢ*)*, α* is a "blending factor" than can be understood as a hyperparameter of the training method, and *̅F̅_̅{̅B̅i̅c̅u̅b̅i̅c̅}̅*̅[̅*̅m̅*̅]̅ is the mean of the m-the region *F_{Bicubic}*[*m*]*.*

An output of this blending operation is provided as desired upsampled feature map (*dᵢ*) to a loss function ( 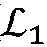 ). Additionally, the upsampled feature map (*oᵢ*) is provided as input to the loss function ( 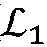 ). The loss function ( 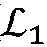 ) is configured to determine a deviation of the upsampled feature map (*oᵢ*) and the desired feature map (*dᵢ*). In particular, the loss function ( 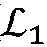 ) may be given by a Euclidean loss function, an *L*₂-loss function, or by a squared *L*₂-loss function. Based on the loss function ( 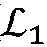 ) a loss value (*l*₁) may be determined. The weights (i.e., trainable parameters) of the neural network (61) may then be adapted based on the loss value (*l*₁), e.g., by performing a form of auto-diff on the loss value (*l*₁) with respect to the weights of the neural network (61) and updating the weights according to the gradient. Weights of the feature extractor (63) may in particular not be adapted, i.e., the feature extractor (63) may be frozen. Training may also be carried out with a batch of training images (*xᵢ*). For training, the SA1 B dataset may be used. However, using a (randomly sampled) subset of 1 million training images from the SA1 B dataset suffices. The training images (*xᵢ*) may in particular be downsampled to a size of 224 by 224 pixels or 448 by 448 pixels for training the neural network (61).

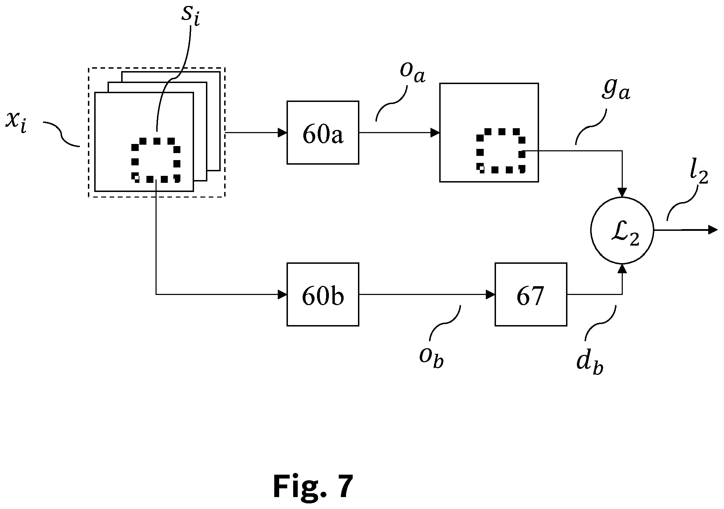

Figure 7 shows an embodiment of the method for training as presented in Figure 6. In a first step a first machine learning system (60a) and a second machine learning system (60b) (each being configured according to the third machine learning system (60) of Figure 2 and using a same feature extractor (63)) may each be pre-trained according to the method of Figure 6, i.e., their respective neural networks (61) may be pretrained according to the method of Figure 6.

Then, for a provided training image (*xᵢ*) a crop (*sᵢ*) may be determined from the training image (*xᵢ*). The crop (*sᵢ*) may especially have a size as used for pretraining the respective neural networks (61), e.g., 224 by 224 pixels or 448 by 448 pixels. The training image (*xᵢ*) may then be downsampled to the size as used for pretraining and may be fed as input to the first machine learning system (60a), wherein the crop (*sᵢ*) may be fed as input to the second machine learning system (60b). The first machine learning system (60a) determines a first upsampled feature map (*oₐ*)*.* Based on the position and size of the crop (*sᵢ*) within the training image (*xᵢ*), a region (*gₐ*) of the first upsampled feature map (*oₐ*) can be determined by extracting the feature vectors from the first upsampled feature map (*oₐ*) that fall into the region defined by the crop (*sᵢ*) with respect to the training image (*xᵢ*).

The second machine learning system (60b) determines a second upsampled feature map (*o_{b}*) which is provided as input to a downsampling module (67). The downsampling module (67) is configured to downsample the second upsampled feature map (*o_{b}*) to the size of the region (*gₐ*), thereby determining a downsampled second feature map (*d_{b}*)*.* The region (*gₐ*) and the downsampled second feature map (*d_{b}*) are then provided to a loss function ( 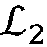 ) characterizing a difference between the region (*gₐ*) and the downsampled second feature map (*d_{b}*)*.* In particular, the loss function ( 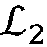 ) may be an affinity matrix loss function. The loss function ( 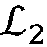 ) determines a loss value (*l*₂) which may then be used to adapt the weights of the neural network (61) of the first machine learning system (60a) as was described for Figure 6. The neural network (61) of the second machine learning system (60b) may preferably be trained by an exponential moving average of the weights of the neural network (61) of the first machine learning system (60a). Preferably, the feature extractors (63) of both the first machine learning system (60a) and the second machine learning system (60b) are frozen during training.

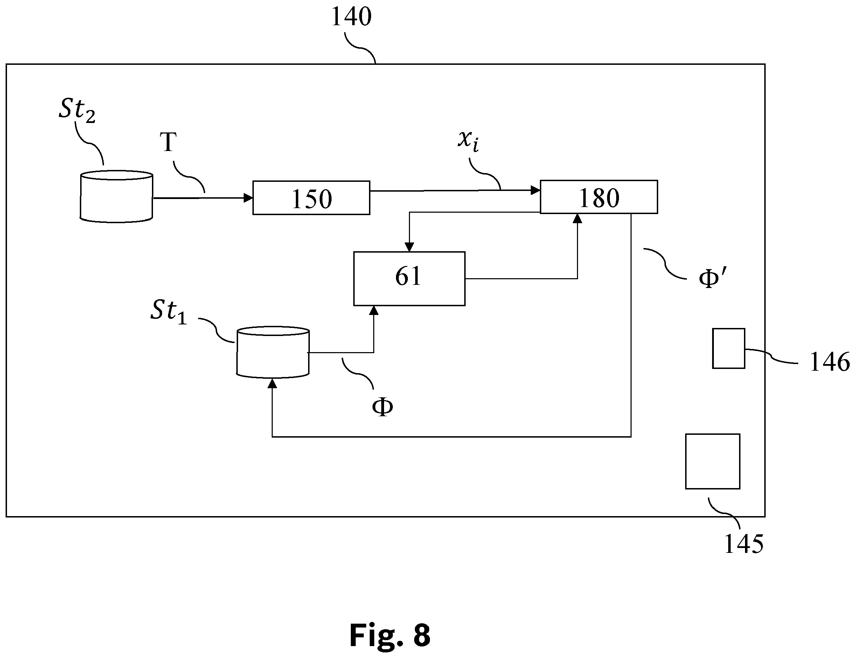

Figure 8 shows an embodiment of a training system (140) for training a neural network (61) by means of a training data set (T). The training data set (T) comprises a plurality of training images (*xᵢ*) which are used for training the neural network (61).

For training, a training data unit (150) accesses a computer-implemented database (St₂), the database (St₂) providing the training data set (T). The training data unit (150) determines from the training data set (T) preferably randomly at least one training image (*xᵢ*) and transmits the training images (*xᵢ*) to a modification unit (180).

The modification unit (180) is configured for executing the method depicted in Figure 6 or Figure 7 for training the neural network (61). With respect to Figure 7, the neural network (61) may be understood to be the neural network of the first machine learning system (60a).

The modification unit (180) determines the new parameters (Φ') based on the first loss value (*l*₁) or second loss value (*l*₂). In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the machine learning system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method for upsampling a feature map (F) of an image (x), the method comprising:
• Obtaining the image (x) and the feature map (F);
• Augmenting the image (x) with respective positional encodings (c) of coordinates of pixels of the image, thereby creating an augmented image (*au*);
• Providing the augmented image (*au*) as input to a neural network (61), wherein the neural network (61) comprises at least one cross-attention layer (CA) that uses the augmented image (*au*) or a representation *(r)* thereof as query input and the feature map (F) as key input;
• Providing an output (*o*) of the neural network (61) as upsampled feature map, wherein the output (*o*) of the neural network (61) is based on an output of the cross-attention layer (CA).

2. Method according to claim 1, wherein the neural network (61) comprises or consists of a plurality of blocks *(tb),* wherein each block *(tb)* comprises or consists of a cross-attention layer (CA) using the feature map (F) as key input and wherein an output (r) of the cross-attention layer (CA) is used as input to a fully-connected neural network (FCNN).

3. Method according to claim 1 or 2, wherein the neural network (61) comprises a convolutional layer (62) as a first layer of the neural network (61), wherein the convolutional layer (62) preserves a width and height of the image.

4. Method according to any one of the claims 1 to 3, wherein the positional encoding (c) of the coordinates of the pixels of the image (x) is a sinusoidal positional encoding (c) of a pixels' respective position within the image (x).

5. Computer-implemented method for determining a semantic segmentation (y₁) of an image and/or for determining a depth map (*y*₂) of the image and/or for determining normal of objects in the image and/or for detecting objects (*yₙ*) in the image comprising the steps of:
• Determining a feature map (F) of the image by providing the image as input to a feature extractor (63);
• Determining an upsampled feature map (o) by providing the determined feature map (F) and the image (x) as input to the method according to any one of the previous claims;
• Determining the semantic segmentation (y₁) and/or the depth map (*y*₂) and/or the normals and/or the objects (*yₙ*) in the image by providing the upsampled feature map (o) to a respective head (h) for determining the semantic segmentation and/or depth map and/or normals and/or the objects.

6. Computer-implemented method for training a neural network (61) according to any one of the preceding claims, wherein the method comprises the steps of:
• Upsampling a feature map (*Fᵢ*) of a training image (*xᵢ*) according to the method of any one of the preceding claims, thereby determining a predicted upsampled image (*oᵢ*);
• Generating an intermediate upsampled feature map (*bᵢ*) from the feature map (*Fᵢ*) using bicubic interpolation;
• Obtaining a class-agnostic mask (*mᵢ*) for the training image (*xᵢ*);
• Refining the intermediate upsampled feature map (*bᵢ*) based on the class-agnostic mask (*mᵢ*) by blending mean feature values of regions within the mask (*mᵢ*) with corresponding values in the intermediate upsampled feature map (*bᵢ*), thereby generating a desired upsampled feature map (*dᵢ*);
• Training the neural network (61) used in the method according to any one of the preceding claims based on a loss function ( 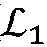 ), wherein the loss function ( 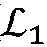 ) characterizes a difference between the predicted upsampled map (*oᵢ*) and the desired upsampled feature map (*dᵢ*).

7. Computer-implemented method for training a first neural network (61) according to any one of the claims 1 to 5 comprising the steps of:
• Training the first neural network (61) according to the method of claim 6 and training a second neural network according to the method of claim 6;
• Obtaining a crop (*sᵢ*) of a training image (*xᵢ*) and downsampling the training image (*xᵢ*) thereby determining a downsampled image;
• Determining a first feature map by means of using the downsampled image as input to a feature extractor (63) and determining a second feature map by means of using the crop (*sᵢ*) as input to the feature extractor (63);
• Determining a first upsampled feature map (*oₐ*) according to any one of the claims 1 to 5 using the downsampled image and the first feature map as input and using the first neural network (60) as neural network within the method;
• Determining a second upsampled feature map (*o_{b}*) according to any one of the claims 1 to 5 using the crop (*sᵢ*) and the second feature map as input and using the second neural network as neural network within the method;
• Determining a region (*gₐ*) in the first upsampled feature map (*oₐ*) that corresponds to the region of the crop (*sᵢ*) in the training image (*xᵢ*);
• Downsampling the second upsampled feature map (*o_{b}*) to the width and height of the region (*gₐ*) thereby determining a downsampled second feature map (*d_{b}*);
• Training the first neural network (61) according to a loss function ( 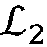 ), wherein the loss function ( 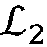 ) characterizes a difference between the region (*gₐ*) and the downsampled second feature map (*d_{b}*)*.*

8. Method according to claim 7, wherein the method further comprises the step of:
• Training the second neural network according to an exponential moving average of weights of the first neural network (61).

9. Method according to claim 7 or 8, wherein the loss function ( 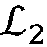 ) characterizes an affinity matrix loss.

10. Training system (140), which is configured to carry out the training method according to any one of the claims 6 to 9.

11. Control system (40), which is configured to carry out the method according to any one of the claims 1 to 5, wherein a control signal (A) is determined based on the upsampled feature map, wherein the control signal (A) is configured to control an actuator (10) and/or a display (10a).

12. Computer program that is configured to cause a computer to carry out the method according to any one of the claims 1 to 9 with all of its steps if the computer program is carried out by a processor (45, 145).

13. Machine-readable storage medium (46, 146) on which the computer program according to claim 12 is stored.
